# EUROPEAN PATENT SPECIFICATION

(11) **EP 0 881 103 B1**
(45) Date of publication and mention of the grant of the patent: **06.10.2004**
(21) Application number: 98660030.2
(22) Date of filing: 02.04.1998
(51) Int. Cl.: B60C 11/12

(54) **Tread on vehicle tyre and lamella for producing surface shape**
Reifenlauffläche für einen Fahrzeugluftreifen und Lamellen zur Herstellung von Oberflächenstrukturen
Bande de roulement d'un pneumatique pour véhicule et lamelles pour la réalisation de structures de surfaces

(30) Priority: 26.05.1997 FI 972214
(43) Date of publication of application: 02.12.1998
(73) Proprietor: Nokian Renkaat Oy, 37101 Nokia (FI)
(72) Inventor: Eromäki, Pentti Juhani, 37120 Nokia (FI)
(74) Representative: Laako, Tero Jussi

(56) References cited:
- EP-A- 0 125 437
- EP-A- 0 131 246
- GB-A- 1 274 554
- PATENT ABSTRACTS OF JAPAN vol. 014, no. 572 (M-1061), 19 December 1990 & JP 02 246810 A (BRIDGESTONE CORP), 2 October 1990

## Description

The invention relates to a vehicle tyre tread which is made up of pattern segments of an elastic material, adjacently positioned in the orientation of the tread and separated one from another by grooves, and of sipes within the tread pattern segments, in each of which sipes the opposed faces, transverse to the outer surface of the tread, are substantially parallel and which sipes are made up of a first portion, which is continuous in the orientation of the tread and extends inwardly in the orientation of the tyre radius from the outer surface of the tread, and of a second portion, which is made up of separate recesses, adjacently positioned in the orientation of the tread and extending inwardly as a continuation of the first portion. The invention also relates to a lamella which has branches for forming recesses in the elastic material forming the tread of a vehicle tyre.

Pattern segments of the type described above and sipes therein are commonly used. Publication GB-1 274 554, corresponding with the preamble of claims 1, 10 and 11, describes a tyre tread pattern segment which contains sipes in each of which the opposed faces are parallel and which have, starting from the outer surface of the tread, first a continuous first portion and, extending from the first portion towards the interior of the tyre, i.e. towards the tyre web, in the radial direction of the tyre towards the centre, a second portion which is made up of recesses adjacently positioned in the orientation of the tread and separate one from another. In this publication, the first portion, towards the tread, is always made up of two straight and planar sections, which form in the orientation of the tread a V-angle in relation to each other. The second portion, extending from the first portion towards the interior parts of the tyre, is made up of recesses, the adjacent recesses always diverging in different directions. Thus, in this publication these recesses turn from the plane of the first portion of the sipe, about a line parallel to the outer surface of the tread, alternately in opposite directions. In this case thus each recess in its entirety is offset from the straight portion which is towards the outer surface of the tread and in such a manner that every second recess is entirely offset from this central plane in one direction and the others in the opposite direction, the reference being the mean plane of the sipe. The publication also mentions other kinds of embodiments, whereupon configuration of the slot-segments are attained by turning, twisting or crimping or angling. In one embodiment twisting may be performed so that one end of the slot segment is disposed on one side of the longitudinal plane of the slot and the other end of the same segment is disposed on the opposite side of the mid-plane of the slot. There are several recesses over the dimension of each of the above-mentioned planar portions. This reference publication cites as the purpose of such a design of the sipe that it prevents stones and other relatively small pieces coming from the road from penetrating deep into these sipes. The design according to this reference publication for sipes in tread pattern segments has at least the following disadvantages. First, the length of the sipes in the orientation of the tread is drastically reduced when the wearing down of the tread approaches its final stage, at which time the length of the sipe may be only approx. 35 % - 50 % of the original length of the sipe. This shortening of the sipe considerably reduces the grip of the tyre, especially during driving on a wet road surface. A tyre according to this reference publication is also very difficult to manufacture, since the detaching of the tread from the mould very probably has the effect that the lamella teeth which produce the recesses described in the publication will tear or damage the tread patterns. Thus the sipes will not remain whole and in their intended shape. Also, during the manufacture of the tyre, the support effect of the lamellae which form the sipes cannot in any way be regulated in the mould afterwards. Furthermore, it can be noted that the outer appearance of the tyre is changed drastically by the wearing down of the tyre, which is not only an aesthetic disadvantage but also results in the above-mentioned worsening of the performance of the tyre. In addition, if a large number of sipes of this type are provided in a tread pattern segment, the driving properties of the tyre will be very poor owing to the said lack of the support effect.

Publications US-2 122 736, US-2 983 005, EP-0 125 437 and EP-0 131 246 disclose tyre tread configurations with a plurality of undulating fine slits positioned side by side along the tread. When more precisely described, the incisions have an amplitude, which is smaller at the bottom of the incisions than at the outer surface of the tread and these inner and outer undulations are in register with each other, or alternatively the fine slits have an amplitude, which is the same at the bottom of the slits as at the outer surface of the tread, but these inner and outer undulations are transferred in respect to each other in the direction of the slit. The fine slits according to these publications have constant depth, unlike the slots according to GB-1 274 554. The disclosed configuration of the fine slits and incisions of the EP-publications are mainly intended to minimize the formation and propagation of cracks caused by road contact forces at the level of the crests of the undulations.

An object of the present invention is therefore to provide, for the sipe in a tread pattern segment in a vehicle tyre, a shape by which an optimal rigidity support and the driving properties desirable in each given case are provided in the tread pattern segment. A second object of the invention is to provide for a sipe in a tread pattern segment a shape which enables a large number of sipes to be made in the pattern segment, thus improving the grip of the tyre in various driving conditions, such as wet roads, ice and snow, but at the same time providing for the pattern segment sufficient rigidity and thereby other good driving properties. A third object of the invention is in a tread pattern segment a sipe shape of this type which retains the properties of the tyre as long as possible as the tyre wears down. A fourth object of the invention is to provide in tread pattern segments sipes of the type described above, which sipes can be manufactured in such a manner that the detaching of the tread from the mould will not damage the tread but the tread will retain as precisely as possible in its intended form the shape produced by the mould. It is also an object of the invention to provide a lamella for a tyre tread mould which enables a tread pattern sipe of the type defined above to be produced in the rubber or rubber combination forming the tyre tread.

The disadvantages described above can be eliminated and the objects defined above can be achieved by means of the vehicle tyre tread according to claim 1, and by means of a lamella according to claims 10 and 11. Preferred features of the tyre tread are defined by dependent claims 2 to 9.

The invention has at least the following advantages. The ridges between the recesses, separate from one another, in the bottoms of the sipes form in the tread pattern segment of a vehicle tyre an effective base support network by means of which an optimal rigidity support of the tread pattern segment and the good driving properties desired in each given case are achieved. Another advantage of the invention is that the support network of the type mentioned above, made up of ridges, enables each tread pattern segment to have a larger number of sipes while, however, a sufficient and thus optimal rigidity is retained in all of the pattern segments. A third advantage of the invention is that, by means of this large number of sipes in a tread pattern segment, a very good grip in all road conditions is achieved. A fourth advantage of the invention is that the support provided according to it by the ridges between the recesses retains also in a very worn tyre a full or almost full sipe volume and thereby a good grip, since the length of the sipe is maintained approximately in an order of magnitude of about 65 % - 80 % of the full length of the outer surface of the sipe until the tyre has worn down all the way to the bottoms of the recesses. In a conventional tread pattern segment, sipes can be provided only in an order of one-half of that possible when using the sipe design according to the present invention, and thus the rigidity of the conventional tread pattern segment is poorer and, in addition, the retaining of, for example, the grip properties for different road conditions is substantially poorer than in the structure according to the present invention. The above-mentioned better support network made up of ridges crossing the sipes enables rubber compounds which are softer than previously, and thus have a better grip, to be used in a vehicle tyre without worsening the properties of the tyre. In fact, when a structure according to the present invention is used and when softer than previous rubber types and thus rubber types with better grip are used, a vehicle tyre which has a better grip and better driving properties in all respects is obtained. In addition, it can be pointed out as a detail that the support of the recesses of the tread pattern segment sipes can, when so desired, be altered by adjusting the lamellae in the mould; in the conventional procedure this is very difficult, perhaps impossible or at least expensive.

The tread pattern sipe according to the invention and the mould lamella used for forming it are described below in detail, with reference to the accompanying figures.
Figure 1 depicts a lamella in a vehicle tyre tread mould, in a direction perpendicular to the lamella, from directions IV of certain sipes in Figures 2A-2B and Figures 5-6. It is to be understood that Figure 1 also depicts a sipe in a tread pattern segment of a vehicle tyre in a direction perpendicular to its mean plane, imagining that the tread mould and the lamella 20 of a stiff material are eliminated. Thus the portion of Figure 1 from surface 9 in direction S depicts, from directions IV, the tread pattern segment sipes depicted in Figure 5-7.
Figure 2A depicts a cross-section of a first embodiment of the lamella according to the invention, through I-I in Figure 1.
Figure 2B depicts a cross-section of a second embodiment of the lamella according to the invention, through I-I in Figure 1.
Figures 3A and 3B depict branches according to a third embodiment of the lamella according to the invention, in cross-section through II-II, and respectively III-III, in Figure 1.
Figures 4A and 4B depict branches according to a fourth embodiment of the lamella according to the invention, in cross-section through II-II, and respectively III-III, in Figure 1.
Figure 5 depicts, in a direction perpendicular to the outer surface of a vehicle tyre tread, a first positioning of sipes in tread pattern segments according to the invention. Each sipe, owing to its narrowness, is depicted with only one thinner or thicker line.
Figure 6 depicts, in a direction perpendicular to the outer surface of a vehicle tyre tread, a second possible positioning of sipes in tread pattern segments according to the invention. Each sipe, owing to its narrowness, is depicted with only one thinner or thicker line.
Figure 7 depicts, in a direction perpendicular to the outer surface of a vehicle tyre tread, a third possible positioning of sipes in tread pattern segments according to the invention. Each sipe, owing to its narrowness, is depicted with only one thinner or thicker line.
Figure 8 depicts, in an axonometric representation, the shape of one branch of lamellae according to the embodiment of Figures 4A and 4B.

Since the present patent application relates both to sipes in the tread pattern segments of a vehicle tyre and to lamellae in a tread mould producing these sipes, it is pointed out here, at the outset, that all the facts which in the following description relate to the sipes, also, where applicable, relate to the lamellae, and the facts which relate to the lamellae also relate to the sipes produced by them. This is self-evident, since in the moulding process the lamella produces a sipe corresponding to its own shape in the elastic material F forming the tyre tread, as is known to happen in all mould forming processes. Nevertheless, the following specification describes, at least in the main, both the lamellae and the sipes produced by them in tread pattern segments.

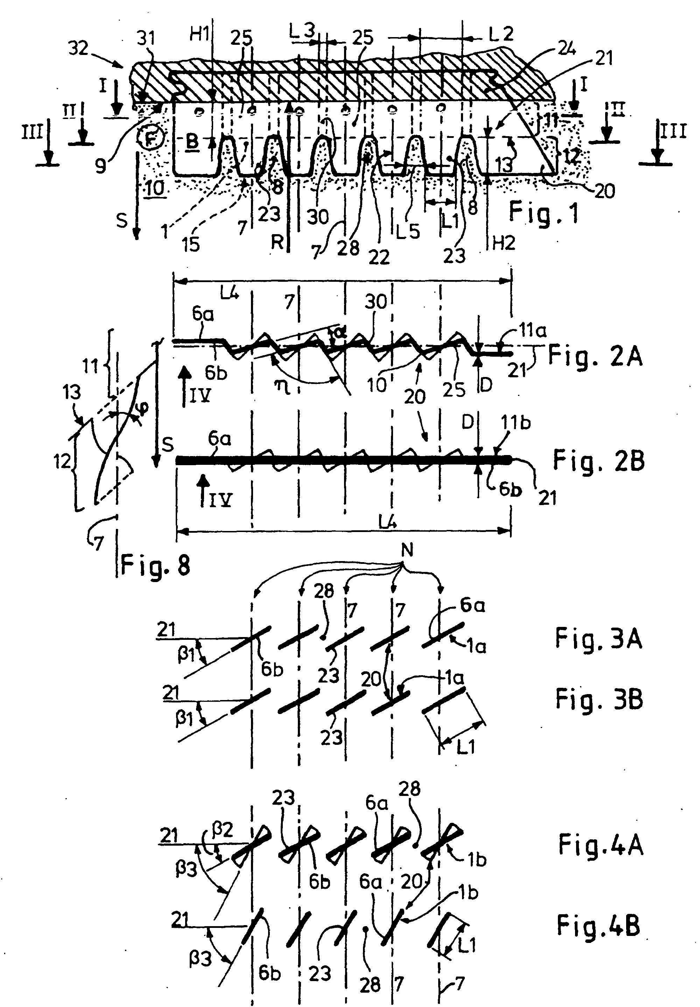

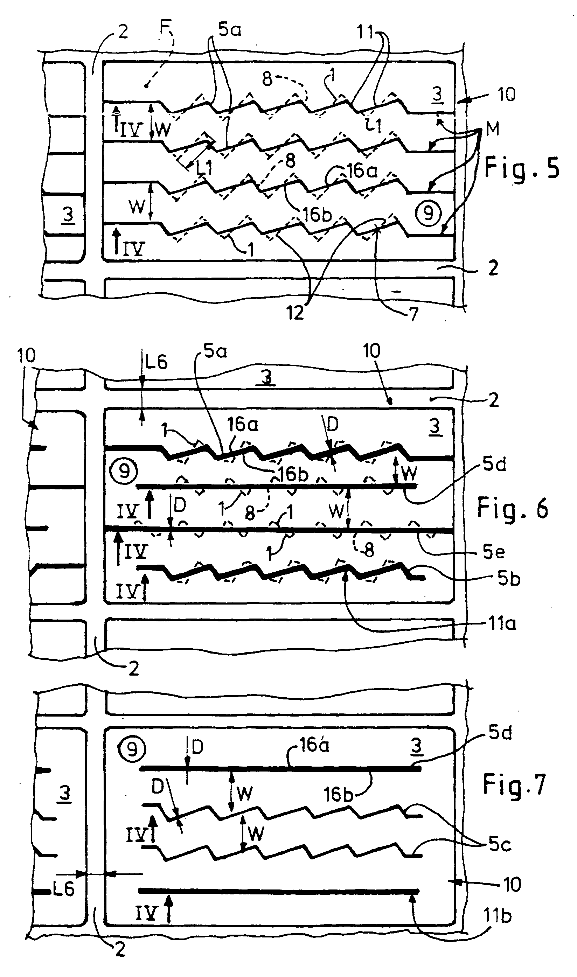

Figure 1 depicts a lamella 20 according to the invention, in a direction perpendicular to its main surface, i.e. from direction IV, and in a state in which the lamella is attached to the tread mould 32 and the lamella is surrounded by the rubber or the rubber compound or the rubber layers F forming the tread. In each tread pattern segment 3 there is a plurality M of these lamellae 20, one next to another, and in general approximately parallel, in the orientation of the tread 10, and in particular in the orientation of the outer surface 9 of the tread. The number M of these lamellae in each tread pattern segment 3 is at least one, but usually two, three or four or more, and in each pattern segment 3 these lamellae are at a distance W one from another. Within one pattern segment these distances W may be all of the same magnitude or of different magnitudes. It should be pointed out in this connection that the lamellae 20 and the sipes 5 produced by them must not be confused with the grooves 2 between the tread pattern segments, which grooves are in the orientation of the tread surface 9 considerably greater in width, as can be seen in Figures 5-7. In the tyre tread the width L6 of the grooves 2 separates the tread pattern segments 3 one from another so that, at least in normal conditions, the pattern segments do not touch one another or at least do not bear one on another. In a manner deviating from this, the sipes 5 in the pattern segments 3 are intentionally so narrow in their width D that the opposed faces 16a, 16b of a sipe will during driving come into contact with each other, at least under the effect of a change in speed and/or a change in direction, i.e. the faces will bear on each other. In the present specification, reference numeral 5 is generally used for a sipe formed by the lamella 20, unless there is special reason to distinguish sipes in different positions or sipes of different kinds, in which case more precise reference numerals 5a...5e are used. These lamellae 20 have substantially parallel faces 6a, 6b, which are substantially perpendicular to that surface 31 of the mould 32 which forms the outer surface 9 of the tread 10.

In the orientation of the tread 10, and thus in particular in the orientation of the mould surface 31 and the outer surface 9 of the tread, these lamellae 20 are made up of a continuous first portion 11, which is located in the tyre tread mould from the said mould surface 31 towards the interior of the tyre structure, in direction S. Reference numeral 11 is also used for indicating in the sipes 5 their corresponding first portion.

Furthermore, the lamellae 20 have a second portion 12, which is made up of branches 23 separate one from another, extending adjacently in the orientation of surface 9 of the tread 10 and as a continuation of the first portion 11 in the direction towards the interior S of the tyre. In addition, the lamella 20, of course, has a portion 24, by which it is secured to the tread mould 32, but this attachment does not in any way relate to the present invention, and therefore it is not described here in greater detail. Thus the lamella 20, as seen in direction IV perpendicular to its plane, is roughly comb-like, having towards the outer surface 9 of the tread a continuous and at least substantially unbroken portion 11 and from this towards the centre of the tyre being manufactured, i.e. towards the tyre body, not shown, a second portion, which is in a way comb-like and is made up of adjacent separate branches 23. Reference numeral 12 is also used for indicating in the sipes 5 their corresponding second portion.

The elastic material F forming the tread is shaped according to the techniques applied in each given case, not described in greater detail in the present specification, between the mould 32 surface 31 and the surfaces 6a and 6b of the lamellae 20 and, of course, the mould projections forming the grooves 2 between the tread pattern segments, so that the lamellae form sipes 5 in each of which the opposed faces 16a and 16b, transverse to the outer surface 9 of the tread and in general approximately perpendicular thereto, are substantially parallel. These sipes 5 are made up of a first portion 11, which is continuous in the orientation of the tread 10 and extends in the orientation of the tyre radius R inwardly S from the outer surface 9 of the tread, towards the rotational axis of the tyre and the bearing web of the tyre. In addition, the sipes 5 comprise a second portion 12, which is made up of mutually separate recesses 1, adjacently positioned in the orientation of the surface 9 of the tread 10, and projecting inwardly S, i.e. towards the body of the tyre, as a continuation of the first portion 11. In this context it can thus be clearly understood that the projections 23 of the lamellae 20 shape the above-mentioned recesses 1 of the second portion 12, and the continuous portion 11 of the lamellae shapes the first continuous portion 11 of the sipes.

It is clear that, because the tread mould 32 has a plurality M of lamellae 20 in order to produce parallel sipes 5, each tread formed in such a mould has in its tread pattern segments a plurality M of sipes, which are at the distances W described above one from another. In general the main planes of these lamellae, and thus of the sipes 5, are approximately parallel, but there is no hindrance to shaping a tread pattern segment 3 in which the lamellae, and thus the sipes, have mutually divergent mean orientations. However, such an embodiment is not shown in the figures. In any case, in each lamella the continuous first portion 11 and the separate branches 23 making up its second portion 12 produce an uninterrupted and continuous piece. Respectively, in each sipe 5 its continuous first portion 11 and the separate recesses 1, adjacent in the orientation of the tread, extending as a continuation of the first portion and forming the second portion 12 which extends towards the interior S of the tyre, produce in each given case a continuous sipe in the tread pattern segment 3.

According to an essential characteristic of the invention, each of the said separate branches 23 of the lamella 20 has a shape turned or twisted about a line 7 substantially perpendicular to the surface plane 31 of the mould 32. In addition, each lamella has a plurality N of such branches 23, each of them being turned or twisted about a separate line perpendicular to the surface plane 31 of the mould. From this it follows, as we bear in mind the mould character of the lamellae 20, that each of the said recesses 1, such as the recesses 1a turned in a planar fashion or spirally twisted recesses 1b, has a shape turned or twisted about a separate line 7 perpendicular to the outer surface 9 of the tread 10. Likewise, each sipe has a plurality N of such recesses 1a, 1b, and they are separated from each other by ridges 8. These ridges 8, for their part, are formed by openings 28 between the separate branches 23 of the lamellae, their width being indicated by L5, as can be clearly understood on the basis of Figures 1 and 3A - 4B.

The above-mentioned branches 23 of the second portion 12 in the lamella 20 may, for example, each be at least in the main part planar. The branches are each turned about a line 7 which is substantially perpendicular to the outer surface 9 of the tread and is located in the middle or close to the middle of the branch width L1, this width being parallel to the outer surface 9 of the tread 10. In this case the branches 23 are thus planar but form an angle, indicated generally by β1, to the mean plane 21, perpendicular to the tread, of the first portion 11. This angle between the branches 23 and the mean plane 21 of the area which constitutes the first portion in the lamella 20 is within a range of 4° - 31°, and preferably within a range of 11° - 24°. Especially in the case described here, in which the branches 23 of the second portion 12 of the lamella are in the main part planar and turned about a certain line 7, each point of the branch within its height H2, which is perpendicular to the mould surface 31, forms an equal angle β1 relative to the mean plane 21, as is clearly shown in Figures 3A and 3B. From this it can be seen that each lamella 23 is at the various points of its height H2 at the same angle β1 to the mean plane 21 of the first portion 11 of the lamella. This holds true whether the first portion 11 is in its entirety straight, as in Figure 2B, or convoluted, as shown in Figure 2A.

On the basis of this it must, of course, be understood that the lamella branches 23 leave, in a vehicle tyre tread, recesses 1a of the type described above in the sipes 5 of the tread pattern segments 3, in which case each of the second portion recesses 1 in the tread pattern segments is in its main part planar and turned about a line 7 substantially perpendicular to its width L1, which width is parallel to the outer surface 9 of the tread. Likewise, the said main parts of these recesses 1a are at a substantially constant angle β1 to the mean plane 21 of the first portion 11. In this connection it must, of course, be understood that, within the boundary region 13 between the first portion 11 and the second portion 12, where the mean plane 21 of the first portion 11 changes to the different position of the lamella branches, and respectively of the recesses 1a, at an angle β1 to the first portion, there is, more or less, a twist. The change of angle from the first portion H1 of the lamella and the sipe to the beginning of the height H2 of the branches, and at the same time recesses 1a, thus presupposes within the boundary region 13 a certain interval of change, not shown in the figures. The height of this boundary region in the direction perpendicular to the mould surface 31, as well as to the outer surface 9 of the tread, thus depends on the thickness of the lamella 20 and on many other factors.

The branches 23 of the lamella and, of course, the shape of the recesses 1b in the sipes 5 in the tread pattern segments 3 can also be arranged so that each branch 23 of the second portion 12 of the lamella is spirally twisted about a line 7 which is located in the middle or the middle area of its width L1 and is perpendicular to the outer surface 9 of the tread, and thus to the outer surface 31 of the mould. In this case the branches 23 are at a changing angle β2 - β3 relative to the mean plane 21 of the first portion 11, as shown in Figures 4A and 4B. In this case both the lamella branches 23 and the second portion 12 recesses 1b produced by them are spirally twisted about a straight line 7 which is located in the middle area of their width L1 in the orientation of the tread and is substantially perpendicular to the outer surface 9 of the tread, as can be understood not only from the above-mentioned Figures 4A and 4B but also from Figure 8. In this case the lamella branches 23 and respectively the recesses 1b are spirally twisted, as in, for example, augers, many drill bits and screws, about a line 7, and the only thing to be noted is that the maximum angle of twist β3 is usually less than 90°. In this case, thus, the width L1 of the branches 23, as well as of the recesses 1b, forms, at II-II, close to the boundary 13 between the first portion 11 and the second portion 12, only a small angle β2 to the mean plane 21 of the first portion 11 and, further away, at III-III, which is closer to the rotation axis of the tyre and thus to the tyre web, a larger angle of twist β3 to the mean plane 21 of the first portion 11, as is clearly depicted in Figures 4A and 4B. This spiral character, i.e. the changing of angle β2 to angle β3, may be stepless, as is depicted in Figures 4A and 4B and in Figure 8, but may also be stepwise, which embodiment is not specifically shown in the figures.

The angles β1 and β2 - β3 of the branches 23, and likewise, of course, of the recesses 1a and 1b, to the mean plane 21 of the first portion may vary within a very wide range. Quite close to the boundary region 13, both angle β1 and angle β2 are, of course, very small, as described above with respect to the height of the area of change. An examination of the main part of the branches 23 and the recesses 1a and 1b shows that the angle between the mean plane 21 of the first portion 11 and the branches 23 and the corresponding recesses may be within a range of 10° - 90°. Preferably, however, this angle is within a range of 20° - 65°. A range of 30° - 55° is also conceivable, but at its most typical the angle β1 is of the order of 45°. In the event that the branches 23, and likewise the recesses 1b produced by them, are spiral, the angle β2, β3 between the mean plane 21 of the first portion 11 and the branches and the corresponding recesses 1b varies within the above-mentioned limits so that, closer to the boundary 13 between the first portion 11 and the second portion 12, the angle β2 is closer to the low values mentioned above and, closer to the bottoms 15 of the branches 23 and likewise the recesses 1b, the angle β3 is closer to the larger angles mentioned above.

As stated above, the first portion 11 of the said lamella, and respectively the sipe 5, over its entire length L4 in the orientation of the outer surface 9 of the tread, and respectively in the orientation of the mould surface 31, may be substantially rectilinear, as is indicated by reference numeral 11b in Figure 2B and in Figure 7. Alternatively, the said first portion 11 may be over its length formed by convolutions 30 and 25 and stepwise in the manner of the portion indicated by reference numeral 11a and depicted in Figure 2A and, for example, in Figure 6. Reference numeral 11 thus denotes generally the first portion of the lamella 20, as well as of the sipe 5 corresponding thereto, regardless of its shape. The said stepwise first portion 11a is typically made up, in the area of the branches of the second portion 12 and the corresponding recesses in the tread, of sections 25 in the areas of widths L1 parallel to the tread; the width of these sections 25 is L2 and they are located between the openings 28 between the second portion branches 23, the openings forming ridges 8 in the tread sipes 5. At the bottoms of the sipes 5, within the height H2 of the second portion 12, the ridges 8 interconnect the opposed faces 16a and 16b of the sipes, as can be understood from the foregoing description and the figures. Thus these tread pattern segments 3 have a support network made up of the ridges 8, the network supporting the tread pattern segment, while the total sipe depth H1+H2 is large, in which case the wearing down of the tyre will not worsen its properties. In the first portion said sections 25 are connected one to another by convolutions 30 within the intervals between the branches 23, and between the corresponding recesses 1a, 1b. In the area of the second portion 12 recesses 1, and thus also in the area of the branches 23 of the lamellae, the above-mentioned stepwise sections 25 are thus typically substantially straight, and their width is L2, as indicated in Figure 1. On the other hand, the convolutions 30 connecting them are small in width L3, corresponding approximately to the bottoms of the recesses between the lamella branches 23, or to the openings 28 between the branches, which openings at the same time thus form the thickness of the outwardly pointing part of the tread ridges 8. However, there is no hindrance to the sections 25 being formed not only substantially straight, but also curved in either transverse direction or in both transverse directions, i.e. either simply curved or corrugated. In any case, the width L2 of the straight or curved sections 25 in the area of the lamella branches 23, and thus the recesses 1a and 1b, is substantially greater than the width L3 of the convolutions 30 connecting them.

In particular with respect to the above-mentioned spiral branches 23, and the corresponding recesses 1b, it is to be noted that also the angle of helix ϕ may, within the height H2 of the second portion 12, be either completely constant, substantially constant, or alternatively the angle ϕ of helix may change when the distance of the branch 23, or respectively the recess 1b, changes in the direction perpendicular to the tread surface 9 or the mould plane 31, while the distance from the boundary region 13 between the first portion and the second portion increases inwardly S from the tyre tread.

The above-mentioned substantially straight or curved sections 25, having a width of L2, of the first portion 11 form in the lamella, relative to a plane 21 on average perpendicular to the outer surface of the tread, an angle α, which is within a range of 4° - 31°, preferably within a range of 11° - 24°. Taking into account the elastic properties of the rubber compound F provided in the mould for a vehicle tyre tread 10, it is possible that there appears slight deviation with respect to the angle between the corresponding sections, having a width of L2, in the sipes of the tread 10 and the mean plane 21 of the sipes. Thus, in sipes 5 the angle of the sections having a width of L2 may be within a range of 5° - 30°, and preferably within a range of 10° - 23°, and typically of an order of 15°, as measured relative to the mean plane 21 of the sipe.

In the sipes 5 of the tyre tread 10, the width L3 of the convolutions 30 in the orientation of the tread is of the same order as the width L5 of the ridges 8 between the recesses, and respectively the openings 28. In the event that the first portion 11a is stepwise, the angle η of the mean plane of each convolution 30, or of the mean tangent to the curvatures, to the said straight or slightly curved sections 25, having a width of L2, adjacent to them, is within a range of 50° - 100°, and preferably within a range of 60° - 90 °. Typically the angle η is of an order of approx. 75°. As was already stated above, a convolution 30 may be curved in either direction over its entire width L3, or it may be made up of two curved sections or of two relatively sharp sections and an approximately straight section connecting them.

The height H2 of the second portion 12 branches 23 described above, and correspondingly the height H2 of the recesses 1 in the direction perpendicular to the tread 9, and respectively the mould surface 31, from the boundary region 13 between the first and second portions to the ends 15 of the branches 23, and thus correspondingly to the bottoms 15 of the recesses 1a and 1b, is at minimum approx. 30 % and at maximum approx. 80 % of the width L1 of the branches, and correspondingly recesses 1a, 1b, in the orientation of the outer surface 9 of the tread 10. Preferably the height H2 is within a range of 40 % - 70 %, and typically 50 % - 60 %, of this width L1 of the recesses 1a, 1b and correspondingly of the branches 23.

The material thickness D of the lamella 20 is, for example, 1/45 - 1/4, and preferably 1/5 - 1/13, and typically within a range of 1/7 - 1/9 of the total of the depths H2 + H1 of the first and second portions 11 and 12 inwardly S from the outer surface 9 of the tread. Again, if the elasticity of the rubber, rubber compound or rubber combination F is taken into account, in a real sipe 5 the thickness D of the sipe may deviate somewhat from those mentioned above, being, for example 1/50 - 1/15, preferably 1/6 - 1/15, and typically within a range of 1/7 - 1/9 as compared with the total depth H2 + H1 of the first and second portions 11 and 12. Thus the sipes 5 according to the invention are relatively narrow, or at least substantially narrower than the width L6 of the grooves 2 between the tread pattern segments 3. The width difference between the sipes 5 and the grooves 2 may even be an order of magnitude.

The sipes 5 according to the invention may be positioned in the tread pattern segments 3 in many different ways. First, the sipes may be of the type 5a, i.e. a type in which the thickness D of the first portion 11 is relatively thin, as is the second portion 12, and the entire sipe is up to the outer surface 9 of the tread 10 stepwise in shape, in which case the first portion is thus stepwise la. In addition, the sipes 5a may extend from one extreme edge of the tread pattern segment 3 to its other extreme edge, in which case the sipes in a tread pattern segment 3 are thus open from one end to the other. Such a structure is shown in Figure 5. The sipes 5a may, of course have even a greater thickness D, as shown with respect to one sipe in Figure 6. Another option is to provide different kinds of sipes 5 in the tread pattern segments 3. Figure 6 depicts, first, a sipe 5a, which is made up of a stepwise first portion 11a which has a relatively large thickness D, but extends in the same manner as described above from one edge of the tread pattern segment 3 to the other. Figure 6 also shows a sipe 5b, which is in other respects of the type mentioned above, i.e. its first portion 11a is stepwise and its thickness D is relatively large, but the sipe does not extend from one edge of the tread pattern segment to the other, as can be seen in Figure 6. In addition, it is possible to form sipes 5d of the type shown in Figures 6 and 7, in which the first portion 11b is straight and has, for example, a relatively large thickness D, and below which towards the tyre body there are recesses 1a or 1b. These recesses are not shown in Figure 7, but otherwise these sipes 5d are shown in both figures. Sipes 5d do not extend from one edge of the tread pattern segment 3 to the other, but are in a way closed at the ends as are sipes 5b. Figure 7 also shows sipes 5c, which are in other respects of the same type as sipes 5a shown in Figure 5, but do not extend all the way to the edges of the tread pattern segment 3, in which respect they resemble sipe 5b shown in Figure 6, with the only difference that by their thickness D sipes 5c are thinner than sipes 5d. In addition to this, Figure 6 shows a sipe 5e, which is made up of a straight first portion 1b, below which there are either planar-turned or spirally-turned recesses 1a, 1b, which are not depicted in Figure 7. This sipe 5e extends from one edge of the tread pattern segment 3 to the other, being thus open over its entire length. Sipe 5e thus resembles sipe 5d, the difference being that sipe 5e extends across the tread pattern segment, being open over its entire length, whereas sipe 5d is closed at its ends. It is to be understood that any of the above-mentioned sipe types 5a, 5b, 5c, 5d, 5e can be used alone as one type in one tread pattern segment, or any combination of these different sipe shapes deemed suitable for the purpose in a given case can be used in one tread pattern segment. There thus exists a large number of sipe shape combinations, especially if we take into account that one pattern segment has a plurality of sipes, possibly more than the four shown in the figure, in which case the number of combinations of different sipe types becomes very large. All of these cannot be shown in the figures of the application.

## Claims

1. A vehicle, tyre tread (10) having an outer surface (9) and comprising:
- tread pattern segments (3) of an elastic material (F), said pattern segments being adjacently positioned along the tread and separated one from another by grooves (2); and
- in said tread pattern segments, at least one sipe (5) with opposed faces (16a, 16b),which are transverse to said outer surface and in the main parallel, and the sipe comprising: in the orientation of the tread a continuous first portion (11), which extends in the direction of the tyre radius (R) inwardly (S) from the outer surface of the tread; and a second portion (12), which is made up of separate recesses (1a, 1b) adjacently positioned along the tread and extend inwardly as a continuation of said first portion; and
- a plurality (N) of these recesses in each sipe (5)each of said recesses, being in shape turned about a separate line perpendicular to said outer surface, and said recesses in the sipe (5) being separated one from another by ridges (8),
**characterised in that** said tread pattern segments comprise at least two sipes (5) at a distance (W) one from another, and that said first portion (11) of the sipes within its length (14) is in the orientation of said tread, either:
- substantially straight (11b); or alternatively
- stepwise (11a), whereupon said first portion has straight or curved sections (25) in the areas of recess (1) widths (L1) of the second portion (12), said straight or curved sections being connected one to another by convolutions (30) in the intervals of said recesses.

2. A tread according to Claim 1, **characterised in that** the recesses (1b) of the second portion (12) have a recess width (L1) in the orientation of the tread and are each spirally twisted about the line (7) located in the middle area of said recess width (L1), the recesses (1b) having a stepwise or continuously changing angle (β2 → β3) to the mean plane (21) of the first portion (11); and that said spiral has an angle of helix (ϕ), which is either substantially constant or alternatively changing along a distance, perpendicular to the surface (9) of the tread, from a boundary region (13) between the first and second portions towards the interior (S) of the tyre tread.

3. A tread according to Claim 1, **characterised in that** each of the recesses (1a) of the second portion (12) have a recess width (L1) in the orientation of the tread and main parts, which are planar and turned about the line (7) which is located in the middle area of said recess width, whereupon said main parts of the recesses (1a) have a substantially constant angle (β1) to the mean plane (21) of the first portion (11).

4. A tread according to Claim 1, **characterised in that** the said sections (25) are substantially straight and form to the mean plane (21) of the sipes (5a...5e), in the orientation of the tread, an angle (α), which is within a range of 5° - 30°, or within a range of 10° - 23°; that the convolutions (30) has a width (L3) approaching width (L5) of the ridges (8) between the recesses; and that each convolution (L3) has a mean angle (η) to said straight parts (L2) adjacent to them being within a range of 50° - 100°, or within a range of 60° - 90°, or alternatively the convolutions (30) are over their entire width (L3) curved in either direction.

5. A tread according to Claim 1, **characterised in that** the grooves (2) between the tread pattern segments (3) have shapes and sizes different from at least said sipes.

6. A tread according to Claim 1, **characterised in that** said recesses (1) have a height (H2) from a boundary region (13) between the first portion and the second portion to bottoms (15) of the recesses, which height is at minimum 30 % and at maximum 80 %, or in the range of 40 % - 70 %, or in the range of 50 % - 60 % of the width (L5) of the recesses; and that the sipes (5) has a thickness (D) in the range of 1/50 - 1/5, or 1/6 - 1/15, or 1/7 - 1/9, of the total depth (H2 + H1) of the first and second portions (11 and 12) from the outer surface (9) towards the interior (S) of the tread.

7. A tread according to Claim 1, **characterised in that** said straight or curved sections (25) has a width (L2) substantially greater than a width (L3) of said convolutions (30) connecting them.

8. A tread according to Claim 1 or 2, **characterised in that** said recesses (1a) being substantially planar have an angle (β1) in respect to the mean plane (21) of the sipe within a range of 4° - 31 °.

9. A tread according to Claim 1, **characterised in that** said recesses (1b) being spirally twisted have changing angles (β2→β3) in respect to the mean plane (21) of the sipe with a maximum angle (β3) less than 90°.

10. Lamellae (20) of a stiff material, for a mould (32) for producing a vehicle tyre tread, which has an outer surface (9) and comprises tread pattern segments (3), the lamellae having opposed faces (6a, 6b) which are substantially perpendicular to said outer surface and substantially parallel, and the lamellae comprising:
- a first portion (11), continuous in the orientation of the tread, which portion extends in the tyre tread mould from the outer surface (9) of the tread towards the interior (S) of the tyre structure; and
- a second portion (12), which is made up of a plurality (N) of separate branches (23), adjacent in the orientation of the tread and extending as a continuation of the first portion towards the interior of the tyre, each of the said branches being in shape turned about a line (7) substantially perpendicular to the outer surface of the tread; as well as
- a third portion (24), by which the lamella is secured to the mould (32),
**characterised in that** said first portion (11) of the lamellae within its length (L4) is in the orientation of said tread:
- substantially straight (11b), or
- stepwise (11a) with straight or curved sections (25) in the areas of branch (23) widths (L1) of the second portion (12), said straight or curved sections being connected one to another by convolutions (30) in the intervals of said branches; and that
said branches (23) are substantially planar and have an angle (β1) in respect to the mean plane (21) of the sipe within a range of 4° - 31°.

11. Lamellae (20) of a stiff material, for a mould (32) for producing a vehicle tyre tread, which has an outer surface (9) and comprises tread pattern segments (3), the lamellae having opposed faces (6a, 6b) which are substantially perpendicular to said outer surface and substantially parallel, and the lamellae comprising:
- a first portion (11), continuous in the orientation of the tread, which portion extends in the tyre tread mould from the outer surface (9) of the tread towards the interior (S) of the tyre structure; and
- a second portion (12), which is made up of a plurality (N) of separate branches (23), adjacent in the orientation of the tread and extending as a continuation of the first portion towards the interior of the tyre, each of the said branches being in shape turned about a line (7) substantially perpendicular to the outer surface of the tread; as well as
- a third portion (24), by which the lamella is secured to the mould (32),
**characterised in that** said first portion (11) of the lamellae within its length (L4) is in the orientation of said tread:
- substantially straight (11b), or
- stepwise (11a) with straight or curved sections (25) in the areas of branch (23) widths (L1) of the second portion (12), said straight or curved sections being connected one to another by convolutions (30) in the intervals of said branches; and that
said branches (23) are spirally twisted and have changing angles (β2→β3) in respect to the mean plane (21) of the sipe with a maximum angle (β3) less than 90°.

## Patentansprüche

1. Fahrzeugreifenlauffläche (10) mit einer Außenfläche (9), aufweisend:
- Laufflächenmustersegmente (3) eines elastischen Materials (F), wobei die Mustersegmente entlang der Lauffläche benachbart positioniert sind und durch Rillen (2) voneinander getrennt sind; und
- in den Laufflächenmustersegmenten mindestens eine Lamelle (5) mit entgegengesetzten Flächen (16a, 16b), welche quer zur Außenfläche und im Wesentlichen parallel zueinander verlaufen, wobei die Lamelle aufweist: in der Laufflächenausrichtung einen durchgehenden ersten Abschnitt (11), welcher sich von der Außenfläche der Lauffläche in der Richtung des Reifenradius (R) einwärts (S) erstreckt; und einen zweiten Abschnitt (12), welcher einzelne Aussparungen (1a, 1b) aufweist, wobei der zweite Abschnitt entlang der Lauffläche zum ersten Abschnitt benachbart positioniert ist und sich als eine Fortsetzung des ersten Abschnittes einwärts erstreckt; und
- eine Mehrzahl (N) dieser Aussparungen in jeder Lamelle (5), wobei jede Aussparung in ihrer Gestalt um eine einzelne Linie senkrecht zu der Außenfläche gedreht ist, und wobei die Aussparungen in der Lamelle (5) durch Stege (8) voneinander getrennt sind,
**dadurch gekennzeichnet, dass** die Laufflächenmustersegmente mindestens zwei Lamellen (5) in einem Abstand (W) voneinander aufweisen; und dass der erste Abschnitt (11) der Lamellen innerhalb seiner Länge (L4) in der Ausrichtung der Lauffläche entweder
- im Wesentlichen gerade (11b) ist; oder anderenfalls
- abgestuft (11a) ist, wobei der erste Abschnitt gerade oder gekrümmte Teilstücke (25) in den Bereichen der Breite (L1) der Aussparungen (1) des zweiten Abschnitts (12) aufweist, wobei gerade oder gekrümmte Teilstücke durch Flächenwindungen (30) in den Intervallen der Aussparungen miteinander verbunden sind.

2. Lauffläche nach Anspruch 1, **dadurch gekennzeichnet, dass** die Aussparungen (1b) des zweiten Abschnittes (12) eine Aussparungsbreite (L1) in der Ausrichtung der Lauffläche aufweisen und jeweils spiralförmig um die Linie (7) verwunden sind, welche im Mittelbereich der Aussparungsbreite (L1) angeordnet ist, wobei die Aussparungen (1b) einen abgestuften oder sich kontinuierlich ändernden Winkel (β2 → β3) zur Mittelebene (21) des ersten Abschnittes aufweisen; und wobei die Spirale einen Schrägungswinkel (ϕ) aufweist, welcher entweder im Wesentlichen konstant oder wahlweise sich entlang eines Abstandes ändert, senkrecht zur Oberfläche (9) der Lauffläche, von einem Grenzbereich (13) zwischen dem ersten Abschnitt und dem zweiten Abschnitt in Richtung zum Innenbereich der Reifenlauffläche.

3. Lauffläche gemäß Anspruch 1, **dadurch gekennzeichnet, dass** jede Aussparung (1a) des zweiten Abschnittes (12) eine Aussparungsbreite (L1) in der Ausrichtung der Lauffläche und Hauptteile aufweist, wobei die Aussparungen planar und um die Linie (7) gedreht sind, welche im Mittelbereich der Aussparungsbreite angeordnet ist, wobei die Hauptteile der Aussparungen (1a) einen im Wesentlichen konstanten Winkel (β1) zur Mittelebene (21) des ersten Abschnittes (11) aufweisen.

4. Lauffläche gemäß Anspruch 1, **dadurch gekennzeichnet, dass** die Teilstücke (25) im Wesentlichen gerade sind und zur Mittelebene (21) der Lamellen (5a ... 5e) in Ausrichtung der Lauffläche einen Winkel (α) bilden, welcher im Bereich von 5° - 30° liegt, oder innerhalb eines Bereiches von 10° - 23°; dass die Flächenwindungen (30) eine Breite (L3) aufweisen, welche annähernd die Breite (L5) der Stege (8) zwischen den Aussparungen ist; und dass jede Flächenwindung (L3) einen mittleren Winkel (η) zu den zu ihnen benachbarten geraden Teilen (L2) innerhalb eines Bereiches von 50° - 100°, oder innerhalb eines Bereiches von 60° - 90° aufweist, oder dass alternativ dazu die Flächenwindungen (30) entlang ihrer gesamten Breite (L3) in beide Richtungen gekrümmt sind.

5. Lauffläche gemäß Anspruch 1, **dadurch gekennzeichnet, dass** die Rillen (2) zwischen den Laufflächenmustersegmenten (3) Formen und Größen aufweisen, welche mindestens von den Lamellen unterschiedlich sind.

6. Lauffläche gemäß Anspruch 1, **dadurch gekennzeichnet, dass** die Aussparungen eine Höhe (H2) von einem Grenzbereich (13) zwischen dem ersten Abschnitt und dem zweiten Abschnitt zu den Böden (15) der Aussparungen aufweisen, wobei die Höhe minimal 30% und maximal 80%, oder im Bereich von 40% - 70%, oder im Bereich von 50% - 60% der Breite (L5) der Aussparungen beträgt; und dass die Lamellen (5) eine Dicke (D) im Bereich von 1/50 - 1/5, oder 1/6 - 1/15, oder 1/7 - 1/9 der Gesamttiefe (H2+H1) des ersten Abschnittes (11) und des zweiten Abschnittes (12) von der Außenfläche (9) in Richtung zum Inneren (S) der Lauffläche aufweisen.

7. Lauffläche gemäß Anspruch 1, **dadurch gekennzeichnet, dass** gerade oder gekrümmte Teilstücke (25) eine Breite (L2) aufweisen, welche im Wesentlichen größer als eine Breite (L3) der sie verbindenden Flächenwindungen (30) ist.

8. Lauffläche gemäß den Ansprüchen 1 oder 2, **dadurch gekennzeichnet, dass** die Aussparungen (1a), welche im Wesentlichen planar sind, einen Winkel (β1) bezüglich der Mittelebene (21) der Lamelle innerhalb eines Bereiches von 4° - 31° aufweisen.

9. Lauffläche gemäß Anspruch 1, **dadurch gekennzeichnet, dass** die Aussparungen (1b), welche spiralförmig verwunden sind, sich ändernde Winkel (β2 → β3) bezüglich der Mittelebene (21) der Lamelle mit einem Maximalwinkel (β3) kleiner als 90° aufweisen.

10. Lamellen (20) eines steifen Materials für eine Form (32) zum Herstellen einer Fahrzeugreifenlauffläche, welche eine Außenfläche (9) und Laufflächenmustersegmente (3) aufweist, wobei die Lamellen entgegengesetzte Flächen (6a, 6b) aufweisen, welche im Wesentlichen senkrecht zur Außenfläche und im Wesentlichen parallel zueinander verlaufen, und wobei die Lamellen aufweisen:
- einen ersten Abschnitt (11), welcher in der Ausrichtung der Lauffläche durchgängig ist, wobei sich der erste Abschnitt in der Form der Reifenlauffläche von der Außenfläche (9) der Lauffläche in Richtung zum Innenbereich (S) der Reifenstruktur erstreckt; und
- einen zweiten Abschnitt (12), welcher eine Mehrzahl (N) getrennter Lamellenstücke (23) aufweist, welcher in der Ausrichtung der Lauffläche zum ersten Abschnitt benachbart ist und sich wie eine Verlängerung des ersten Abschnittes in Richtung zum Inneren des Reifens hin erstreckt, wobei jedes Lamellenstück in seiner Gestalt um eine Linie (7) gedreht ist, welche im Wesentlichen senkrecht zur Außenfläche der Lauffläche ist; und
- einen dritten Abschnitt (24), in welchem die Lamelle mit der Form (32) gesichert ist,
**dadurch gekennzeichnet, dass** der erste Abschnitt (11) der Lamellen innerhalb seiner Länge (L4) in der Ausrichtung der Lauffläche:
- im Wesentlichen gerade (11b) ist, oder
- abgestuft (11a) ist mit geraden oder gekrümmten Teilstücken (25) in den Bereichen der Breite (L1) der Lamellenstücke (23) des zweiten Abschnittes (12), wobei die geraden oder gekrümmten Teilstücke durch Flächenwindungen (30) in den Intervallen der Lamellenstücke miteinander verbunden sind; und dass
die Lamellenstücke (23) im Wesentlichen planar sind und einen Winkel (β1) bezüglich der Mittelebene (21) der Lamelle im Bereich von 4° - 31° aufweisen.

11. Lamellen (20) eines steifen Materials für eine Form (32) zum Herstellen einer Fahrzeugreifenlauffläche, welche eine Außenfläche (9) und Laufflächenmustersegmente (3) aufweist, wobei die Lamellen entgegengesetzte Flächen (6a, 6b) aufweisen, welche im Wesentlichen senkrecht zur Außenfläche und im Wesentlichen parallel zueinander verlaufen, und wobei die Lamellen aufweisen:
- einen ersten Abschnitt (11), welcher in der Ausrichtung der Lauffläche durchgängig ist, wobei sich der erste Abschnitt in der Form der Reifenlauffläche von der Außenfläche (9) der Lauffläche in Richtung zum Innenbereich (S) der Reifenstruktur erstreckt; und
- einen zweiten Abschnitt (12), welcher eine Mehrzahl (N) getrennter Lamellenstücke (23) aufweist, welcher in der Ausrichtung der Lauffläche zum ersten Abschnitt benachbart ist und sich wie eine Verlängerung des ersten Abschnittes in Richtung zum Inneren des Reifens hin erstreckt, wobei jedes Lamellenstück in seiner Gestalt um eine Linie (7) gedreht ist, welche im Wesentlichen senkrecht zur Außenfläche der Lauffläche ist; und
- einen dritten Abschnitt (24), in welchem die Lamelle mit der Form (32) gesichert ist,
**dadurch gekennzeichnet, dass** der erste Abschnitt (11) der Lamellen innerhalb seiner Länge (L4) in der Ausrichtung der Lauffläche:
- im Wesentlichen gerade (11b) ist, oder
- abgestuft (11a) ist mit geraden oder gekrümmten Teilstücken (25) in den Bereichen der Breite (L1) der Lamellenstücke (23) des zweiten Abschnittes (12), wobei die geraden oder gekrümmten Teilstücke durch Flächenwindungen (30) in den Intervallen der Lamellenstücke miteinander verbunden sind; und dass
die Lamellenstücke (23) spiralförmig verwunden sind und sich ändernde Winkel (β2 → β3) bezüglich der Mittelebene (21) der Lamelle mit einem Maximalwinkel (β3) kleiner als 90° aufweisen.

## Revendications

1. Bande de roulement de pneu de véhicule (10) comportant une surface extérieure (9) et comprenant :
- des segments de motif de bande de roulement (3) d'un matériau élastique (F), lesdits segments de motif étant positionnés de manière adjacente sur la bande de roulement et séparés les uns des autres par des rainures (2), et
- dans lesdits segments de motif de bande de roulement, au moins un sillon (5) comportant des faces opposées (16a, 16b) qui sont transversales par rapport à ladite surface extérieure et en général parallèles, et le sillon comprenant : selon l'orientation de la bande de roulement, une première partie continue (11) qui s'étend dans la direction du rayon du pneu (R) vers l'intérieur (S) à partir de la surface extérieure de la bande de roulement, et une seconde partie (12) qui est constituée de creux séparés (1a, 1b) positionnés de manière adjacente le long de la bande de roulement et s'étendant vers l'intérieur comme un prolongement de ladite première partie, et
- une pluralité (N) de ces creux dans chaque sillon (5), chacun desdits creux étant d'une forme contournée autour d'une ligne séparée perpendiculaire à ladite surface extérieure, et lesdits creux dans le sillon (5) étant séparés les uns des autres par des nervures (8),
**caractérisée en ce que** lesdits segments de motif de bande de roulement comprennent au moins deux sillons (5) à une distance (W) l'un de l'autre et **en ce que** ladite première partie (11) des sillons à l'intérieur de sa longueur (L4) est selon l'orientation de ladite bande de roulement, soit :
- pratiquement droite (11b), soit en variante
- en gradins (11a), après quoi ladite première partie comporte des sections droites ou incurvées (25) dans les zones des largeurs (L1) de creux (1) de la seconde partie (12), lesdites sections droites ou incurvées étant reliées les unes aux autres par des circonvolutions (30) dans les intervalles desdits creux.

2. Bande de roulement selon la revendication 1, **caractérisée en ce que** les creux (1b) de la seconde partie (12) présentent une largeur de creux (L1) selon l'orientation de la bande de roulement et sont chacun tordus en spirale autour de la ligne (7) située dans la zone intermédiaire de ladite largeur de creux (L1), les creux (1b) ayant un angle en gradins ou variant de manière continue (β2 → β3) par rapport au plan moyen (21) de la première partie (11) et **en ce que** ladite spirale présente un angle d'hélice (ϕ), qui est soit pratiquement constant soit en variante change sur une distance, soit perpendiculaire à la surface (9) de la bande de roulement à partir d'une région de limite (13) entre les première et seconde parties vers l'intérieur (S) de la bande de roulement de pneu.

3. Bande de roulement selon la revendication 1, **caractérisée en ce que** chacun des creux (1a) de la seconde partie (12) présente une largeur de creux (L1) selon l'orientation de la bande de roulement et des parties principales qui sont planes et tournées autour de la ligne (7) qui est située dans la zone intermédiaire de ladite largeur de creux, après quoi lesdites parties principales des creux (1a) présentent un angle pratiquement constant (β1) par rapport au plan moyen (21) de la première partie (11).

4. Bande de roulement selon la revendication 1, **caractérisée en ce que** lesdites sections (25) sont pratiquement droites et forment par rapport au plan moyen (21) des sillons (5a...5e), selon l'orientation de la bande de roulement, un angle (α) qui est dans une plage de 5°à 30° ou dans une plage de 10° à 23°, **en ce que** les circonvolutions (30) présentent une largeur (L3) approchant la largeur (L5) des nervures (8) entre les creux et **en ce que** chaque circonvolution (L3) présente un angle moyen (η) par rapport auxdites parties droites (L2) qui leur sont adjacentes dans une plage de 50° à 100° ou dans une plage de 60° à 90°, ou en variante les circonvolutions (30) sont courbées dans l'une ou l'autre direction sur toute leur largeur (L3).

5. Bande de roulement selon la revendication 1, **caractérisée en ce que** les rainures (2) entre les segments de motif de bande de roulement (3) ont des formes et des tailles différentes d'au moins lesdits sillons.

6. Bande de roulement selon la revendication 1, **caractérisée en ce que** lesdits creux (1) présentent une hauteur (H2) à partir d'une région de limite (13) entre la première partie et la seconde partie jusqu'aux fonds (15) des creux, laquelle hauteur est au minimum de 30 % et au maximum de 80 % ou dans la plage de 40 % à 70 %, ou dans la plage de 50 % à 60 % de la largeur (L5) des creux, et **en ce que** les sillons (5) présentent une épaisseur (D) dans la plage de 1/50 à 1/5, ou de 1/6 à 1/15, ou de 1/7 à 1/9 de la profondeur totale (H2 + H1) des première et seconde parties (11 et 12) depuis la surface extérieure (9) vers l'intérieur (S) de la bande de roulement.

7. Bande de roulement selon la revendication 1, **caractérisée en ce que** lesdites sections droites ou incurvées (25) présentent une largeur (L2) substantiellement plus grande qu'une largeur (L3) desdites circonvolutions (30) qui les relient.

8. Bande de roulement selon la revendication 1 ou 2, **caractérisée en ce que** lesdits creux (1a), qui sont pratiquement plans, présentent un angle (β1) par rapport au plan moyen (21) du sillon dans une plage de 4° à 31°.

9. Bande de roulement selon la revendication 1, **caractérisée en ce que** lesdits creux (1b) qui sont tordus en spirale, présentent des angles variables (β2 → β3) par rapport au plan moyen (21) du sillon avec un angle maximum (β3) inférieur à 90°.

10. Lamelles (20) en un matériau rigide pour un moule (32) pour produire une bande de roulement de pneu de véhicule, qui présente une surface extérieure (9) et comprend des segments de motif de bande de roulement (3), les lamelles présentant des faces opposées (6a, 6b) qui sont pratiquement perpendiculaires à ladite surface extérieure et pratiquement parallèles, et les lamelles comprenant :
- une première partie (11) continue selon l'orientation de la bande de roulement, laquelle partie s'étend dans le moule de bande de roulement de pneu depuis la surface extérieure (9) de la bande de roulement vers l'intérieur (S) de la structure de pneu, et
- une seconde partie (12) qui est constituée d'une pluralité (N) de ramifications séparées (23) adjacentes selon l'orientation de la bande de roulement et s'étendant sous forme d'un prolongement de la première partie vers l'intérieur du pneu, chacune desdites ramifications étant d'une forme contournée autour d'une ligne (7) pratiquement perpendiculaire à la surface extérieure de la bande de roulement de même que
- une troisième partie (24) par laquelle la lamelle est fixée au moule (32),
**caractérisées en ce que** ladite première partie (11) des lamelles à l'intérieur de sa longueur (L4) est selon l'orientation de ladite bande de roulement :
- pratiquement droite (11b), ou
- en gradins (11a) avec des sections droites ou incurvées (25) dans les zones de largeurs (L1) de ramifications (23) de la seconde partie (12), lesdites sections droites ou incurvées étant reliées les unes aux autres par des circonvolutions (30) dans les intervalles desdites ramifications et **en ce que**
lesdites ramifications (23) sont pratiquement planes et présentent un angle (β1) par rapport au plan moyen (21) du sillon dans une plage de 4° à 31°.

11. Lamelles (20) en un matériau rigide pour un moule (32) pour produire une bande de roulement de pneu de véhicule qui présente une surface extérieure (9) et comprend des segments de motif de bande de roulement (3), les lamelles ayant des faces opposées (6a, 6b) qui sont pratiquement perpendiculaires à ladite surface extérieure et pratiquement parallèles, et les lamelles comprenant :
- une première partie (11) continue selon l'orientation de la bande de roulement, laquelle partie s'étend dans le moule de bande de roulement de pneu depuis la surface extérieure (9) de la bande de roulement vers l'intérieur (S) de la structure du pneu, et
- une seconde partie (12) qui est constituée d'une pluralité (N) de ramifications séparées (23) adjacentes selon l'orientation de la bande de roulement et s'étendant sous forme d'un prolongement de la première partie vers l'intérieur du pneu, chacune desdites ramifications étant d'une forme contournée autour d'une ligne (7) pratiquement perpendiculaire à la surface extérieure de la bande de roulement de même que
- une troisième partie (24) par laquelle la lamelle est fixée au moule (32),
**caractérisées en ce que** ladite première partie (11) des lamelles dans sa longueur (L4) est selon l'orientation de ladite bande de roulement :
- pratiquement droite (11b), ou
- en gradins (11a) avec des sections droites ou incurvées (25) dans les zones de largeurs (L1) de ramifications (23) de la seconde partie (12), lesdites sections droites ou incurvées étant reliées les unes aux autres par des circonvolutions (30) dans les intervalles desdites ramifications et **en ce que**
lesdites ramifications (23) sont tordues en spirale et présentent des angles variables (β2 → β3) par rapport au plan moyen (21) du sillon avec un angle maximum (β3) inférieur à 90°.
